Europäisches Patentamt

European Patent Office

Office européen des brevets

(11) Numéro de publication: **0 358 213**
**A1**

## (12) DEMANDE DE BREVET EUROPEEN

(21) Numéro de dépôt: **89116542.5**

(51) Int. Cl.5: **H02J 7/10**

(22) Date de dépôt: **07.09.89**

(30) Priorité: **09.09.88 FR 8811794**

(43) Date de publication de la demande:
**14.03.90 Bulletin 90/11**

(84) Etats contractants désignés:
**AT BE CH DE ES FR GB GR IT LI LU NL SE**

(71) Demandeur: **Société Anonyme dite SAFT**
**156, avenue de Metz**
**F-93230 Romainville(FR)**

(72) Inventeur: **Cuesta, Rosendo**
**Avenue du C.E.S.**
**F-33450 Saint Loubes(FR)**

(74) Mandataire: **Weinmiller, Jürgen et al**
**Lennéstrasse 9 Postfach 24**
**D-8133 Feldafing(DE)**

(54) **Procédé de charge ultrarapide pour accumulateur cadmium-nickel étanche.**

(57) Procédé de charge en un temps de l'ordre de trois à quinze minutes pour accumulateur cadmium-nickel étanche.

La charge est réalisée sous une tension de charge constante inférieure à celle pour laquelle il y a dégagement d'hydrogène à l'électrode négative de l'accumulateur. Elle est arrêtée dès que l'intensité de charge de l'accumulateur subit un accroissement significatif après avoir décru au fur et mesure de la charge.

FIG. 2

**Procédé de charge ultrarapide pour accumulateur cadmium-nickel étanche.**

L'invention concerne un procédé de charge dite ultrarapide, de l'ordre de trois à quinze minutes, pour accumulateur cadmium-nickel étanche.

Les accumulateurs cadmium-nickel étanches sont classiquement réalisés sous forme de modules cylindriques ou prismatiques susceptibles d'être utilisés de manière connue soit isolément soit associés à d'autres modules identiques avec lesquels ils sont éventuellement regroupés dans un même conditionnement.

L'un des intérêts de tels accumulateurs cadmium-nickel étanches réside pour l'utilisateur dans le fait qu'ils admettent d'être rechargés rapidement.

Les chargeurs usuels permettent d'effectuer des charges en environ une heure avec des intensités de charge du même ordre que les valeurs de capacité des accumulateurs par exemple un ou deux ampères pour un accumulateur ayant une capacite de un ampère-heure quatre.

Ce type d'accumulateurs possède une grande souplesse d'utilisation qui convient dans de nombreux domaines d'application, notamment pour des émetteurs-récepteurs ou pour de l'outillage portatif.

Cependant, dans certaines applications récentes notamment pour le modélisme, l'outillage portable professionnel, le téléphone cellulaire, le besoin d'une charge, dite ultrarapide, d'une durée encore plus brève, de l'ordre de quelques minutes, se manifeste.

Compte tenu du mode de fonctionnement des accumulateurs étanches, la réalisation d'une charge ultrarapide nécessite, un contrôle et une détection de fin de charge particulièrement fiables et précis afin d'assurer la sécurité des utilisateurs et le maintien dans le temps des performances de ces accumulateurs.

A cet effet, l'invention propose un procédé de charge dite ultrarapide pour accumulateur cadmium-nickel étanche.

Selon une caractéristique de l'invention, la charge, effectuée dans un temps de l'ordre de trois à quinze minutes, est réalisée sous une tension de charge inférieure à la tension pour laquelle il y a dégagement d'hydrogène sous forme gazeuse et est arrêtée dès que l'intensité du courant en cours de charge subit un accroissement significatif, après avoir décru en cours de charge.

L'invention, ses caractéristiques et ses avantages sont précisés, dans la description qui suit en liaison avec les figures répertoriées ci-dessous.

La figure 1 montre l'évolution, des paramètres de tension U, de température T, de pression P, d'intensité I et de capacité chargée CC en fonction du temps dans un accumulateur soumis à une charge rapide.

La figure 2, montre l'évolution de l'intensité du courant de charge I1, I2 ou I3 pour un accumulateur soumis à une tension de charge constante de valeur U1 = 1,60 volt, U2 = 1,64 volt U3 = 1,67 volt.

La figure 3 montre l'évolution de la capacité chargée CC et de la durée de charge DC en fonction de la tension de charge.

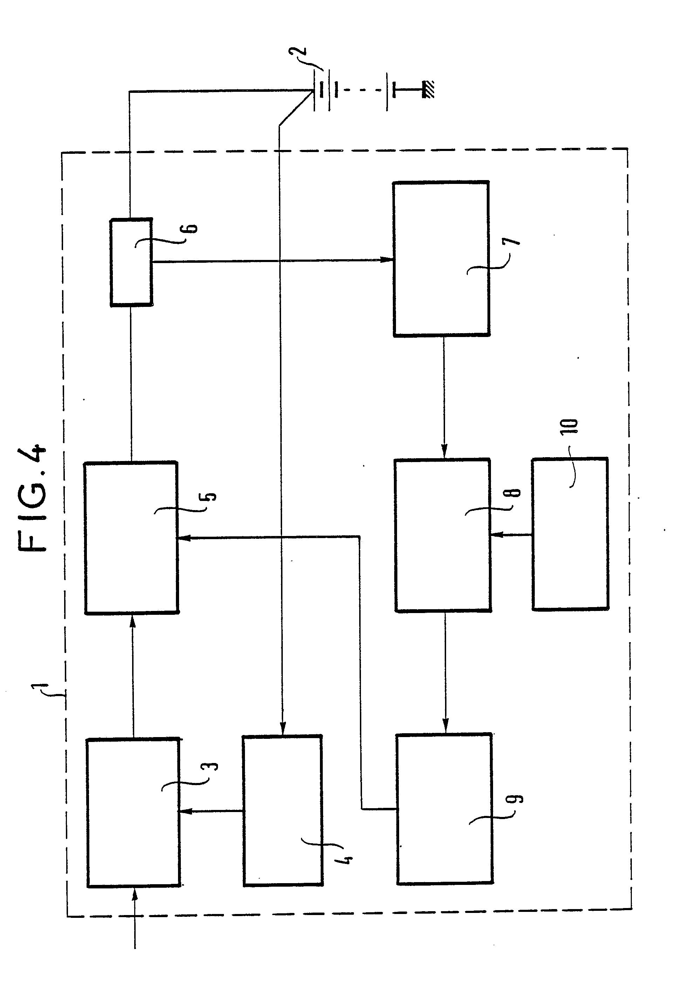

La figure 4 présente un schéma de principe d'un chargeur pour la mise en oeuvre du procédé selon l'invention.

Pour des raisons pratiques, la plupart des utilisateurs souhaitent disposer d'accumulateurs étanches, qui évitent tout dégagement gazeux ou écoulement liquide en usage normal.

Or de manière connue, la charge complète d'un accumulateur passe par deux phases, dans une première phase il y a une oxydoréduction des matières actives des électrodes, cette oxydoréduction est endothermique et sans dégagement gazeux, lorsque les conditions sont normales. Puis lorsque toute la matière active des électrodes a été transformée, l'accumulateur entre dans une phase de surcharge et l'énergie fournie produit un dégagement d'oxygène sur l'électrode positive et sa réduction sur l'électrode négative. Cette réaction, appelée recombinaison, conduit à un échauffement de l'accumulateur et à une augmentation de la pression interne de l'accumulateur lorsque ce dernier est étanche. La pression varie proportionnellement à l'intensité de charge.

Pour des raisons de sécurité, les accumulateurs étanches sont munis de soupapes de sécurité qui permettent de limiter leur pression interne à une valeur non dangereuse et dont la mise en oeuvre ne se produit pas au cours d'un fonctionnement normal.

Les valeurs couramment admises pour une fin de charge dans un accumulateur sont par exemple une température de 45 °C et une pression interne inférieure à 15 kg/cm².

Lorsqu'on désire une charge ultra-rapide, effectuée par exemple en trois minutes pour un accumulateur de capacité 1,4 ampère/heure et de format normalisé Cs, l'intensité moyenne pendant la charge devra être grande, correspondant par exemple à 20 fois la capacité de l'accumulateur à charger.

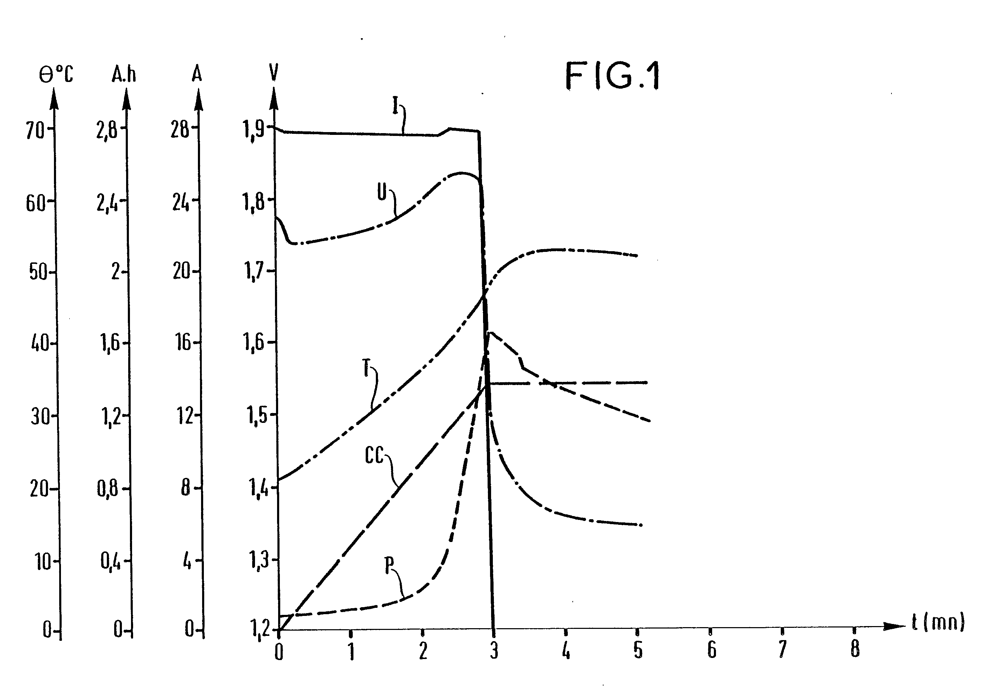

L'évolution des paramètres de tension, de température et de pression interne de l'accumulateur au cours d'une charge à température ambiante de 20 °C est montrée en figure 1.

Le diagramme relatif à la pression dans l'accumulateur montre que celle-ci augmente de 1 kg/cm² toutes les 3 secondes au cours des 30 dernières secondes de charge et atteint très rapidement la valeur d'ouverture des soupapes.

Le diagramme relatif à la tension aux bornes de l'accumulateur en charge, montre que celle-ci dépasse 1,80 V en charge à 20° C.

Une telle valeur indique la présence d'un dégagement d'hydrogène sur l'électrode négative.

Ce phénomène est éventuellement amplifié par une température ambiante plus basse, par un fonctionnement à basse température ou par un stockage prolongé des accumulateurs avant charge, il n'est pas compatible avec un fonctionnement étanche.

En effet, l'hydrogène produit à l'intérieur de l'accumulateur ne peut se recombiner et l'augmentation de pression qui en résulte a des effets cumulatifs.

Ceci conduit donc à rechercher une maîtrise de la pression interne des accumulateurs à des valeurs compatibles avec le tarage choisi pour des raisons de sécurité pour les soupapes, à réduire au maximum la phase de surcharge, ainsi qu'à limiter la tension de charge.

Les principaux systèmes de charge rapide connus assurent la charge des accumulateurs à intensité constante, régulée ou limitée, selon la stabilité souhaitée.

La durée de la charge est de l'ordre d'une heure et l'intensité de charge voisine de la capacité des accumulateurs.

La détection de fin de charge est assurée dans la plupart des cas par contrôle soit de la durée de la charge, soit de la tension en charge des accumulateurs, soit de la température des accumulateurs, soit encore par la variation négative de la tension de fin de charge.

Dans le premier cas, un dispositif de comptage est initialisé à la mise en charge et il interrompt celle-ci lorsqu'un temps prédéterminé est écoulé. Ce dispositif ne permet normalement pas de limiter la tension en charge. Il présente en outre l'inconvénient d'autoriser une surcharge importante des accumulateurs, notamment si l'état de charge initial n'est pas nul, par exemple en cas de charges consécutives, ou bien en cas de perte de capacité des accumulateurs par vieillissement.

Dans le second cas, la tension de l'accumulateur est comparée à un seuil prédéterminé qui correspond à la consigne d'arrêt de la charge.

Les inconvénients de ce procédé sont liés au fait que la tension des accumulateurs en charge dépend de nombreux paramètres tels que l'intensité du courant de charge, la température ambiante, le vieillissement des accumulateurs ; le critère choisi est donc peu fiable et difficile d'exploitation et il est finalement peu utilisé.

De plus, dans le cas de charges effectuées à basse température ou sur des accumulateurs ayant subi un stockage, des pointes de tension apparaissent en début de charge et sont susceptibles d'interrompre celle-ci de manière aléatoire.

Dans le troisième cas, la température des accumulateurs est mesurée par un dispositif de détection thermique qui permet d'arrêter la charge dès que la température atteint une valeur déterminée, par exemple entre 40° C et 50° C.

Il y a dans ce cas une influence importante de la température ambiante sur la température des accumulateurs, ce qui interdit une utilisation directe de cette dernière comme critère d'arrêt de charge.

De plus le temps de réponse est très grand et ne permet pas de prendre en compte l'accroissement rapide de la pression interne des accumulateurs après la fin de la première phase de charge pour des intensités de charge très élevées.

En dernier lieu, les conditions de recharge sont mauvaises pour des températures ambiantes proches de la température de consigne d'arrêt de la charge, car une faible élévation de la température de l'accumulateur en début de recharge suffit à interrompre celle-ci.

Dans le quatrième cas, on exploite la diminution de la tension des accumulateurs en charge lorsque la température de ceux-ci augmente lors du passage de la phase de charge à celle de surcharge.

Cette diminution est due au coefficient de température négatif du couple nickel-cadmium.

Cette caractéristique bien adaptée aux charges d'une heure environ, ne l'est pas dans le cas de charges ultrarapides, en effet l'évolution de la tension des accumulateurs au cours de la charge n'offre pas de possibilité d'exploitation permanente du para-mètre -V, comme on le voit sur le diagramme de la figure 1 réalisé pour une température ambiante de + 20° C. Dans ce cas un signal de tension suffisant n'apparaît que lorsque la pression interne atteint 16 Kg/cm².

D'autre part, aucune limitation à la tension en charge des accumulateurs n'est alors apportée.

Par ailleurs, à la température ambiante considérée, une décroissance importante de la tension en début de charge est observée et ce phénomène, habituel en charge à très forte intensité ou après stockage prolongé, conduit à un fonctionnement aléatoire du système de détection de fin de charge.

Les risques de surpression dans les accumulateurs et donc d'explosion ne peuvent alors être exclus.

L'invention propose donc de limiter la tension de charge des accumulateurs à des valeurs pour lesquelles on évite les dégage ments d'hydrogène et d'utiliser un signal de fin de charge rapide qui permet de contrôler la pression interne régnant dans les accumulateurs de manière à la limiter a des valeurs inférieures à celles de tarage des soupapes.

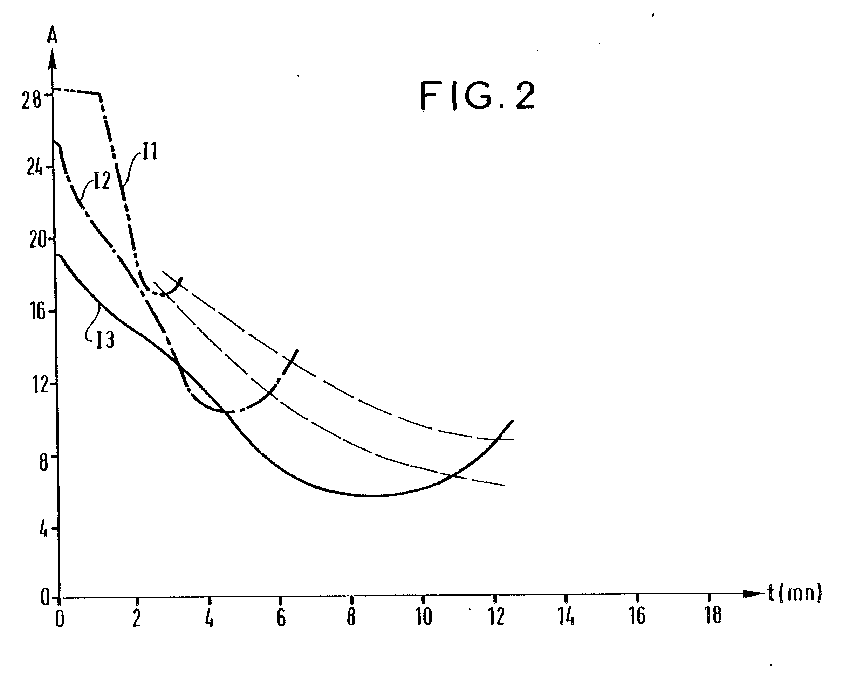

La figure 2 montre, en fonction de la durée, l'évolution de l'intensité de charge d'un accumulateur soumis à des tensions constantes inférieures à celle pour laquelle il y a dégagement d'hydrogène.

On constate que, d'une part, l'intensité du courant de charge traversant un accumulateur cadmium-nickel donné, chargé sous une tension donnée, passe par un minimum qui correspond pratiquement à la fin de la phase endothermique après être partie d'une valeur élevée en début de charge et que d'autre part l'intensité du courant de charge augmente à nouveau après être passée par un minimum pour atteindre une valeur pour laquelle la pression atteinte dans l'accumulateur passe au-delà d'un seuil de pression, en raison de la génération d'oxygène. Deux seuils de pression, l'un de dix bars et l'autre de quinze bars, sont ici figurés et l'on voit clairement sur la figure 2 que, pour chacune des courbes donnant l'intensité du courant de charge en fonction de la durée de charge pour les trois tensions de charge de 1,60 volt, 1,64 volt et 1,70 volt, on atteint rapidement l'un puis l'autre de deux seuils de pression de 10 et 15 bars, après passage du courant de charge par un minimum. Les seuils de pression sont d'autant plus rapidement atteints que la tension de charge est élevée.

En conséquence selon l'invention on limite la tension de charge à une valeur comprise entre 1,55 et 1,70 volt par accumulateur, c'est-à-dire plus précisément par module, lorsque la température est comprise entre 0 et 40° C, afin d'éviter les dégagements d'hydrogène.

Dans la mesure ou les courbes de la figure 2, montrent clairement que l'intensité du courant de charge passant au travers d'un accumulateur augmente rapidement après être passée par un minimum, on exploite cet accroissement pour déclencher la fin du processus de charge rapide, une augmentation de l'ordre de 0,1 à 1 ampère par rapport à la valeur minimale du courant est préférablement choisie comme seuil de déclenchement de fin de charge rapide. Le courant de charge peut être alors totalement supprimé ou réduit à des valeurs normales pour l'accumulateur (inférieures au dixième de sa capacité nominale).

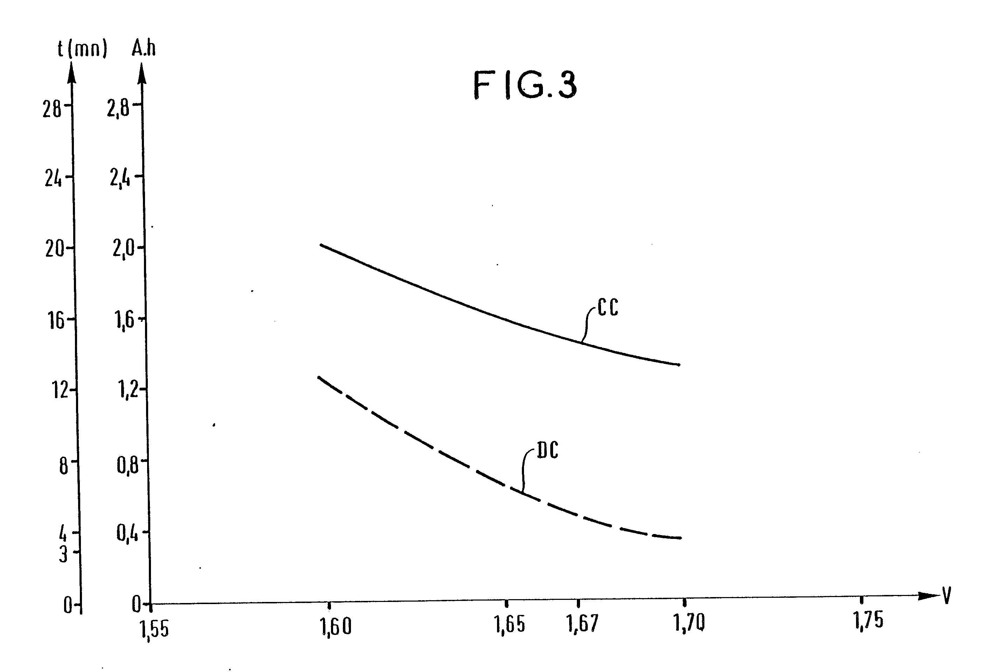

Les deux courbes de la figure 3 montrent respectivement un exemple d'évolution de la durée de charge et de la capacité chargée en fonction de la tension de charge dans les conditions évoquées ci-dessus, c'est-à-dire avec une tension de charge constante comprise entre 1,60 et 1,70 volt, l'intensité du courant de charge étant limitée à 28 ampères à une température de 20° C lorsque la pression interne atteint la valeur de 15 kg/cm$^2$ pour des accumulateurs ayant une capacité de l'ordre de 1,25 à 2 ampère/heure.

Il est alors possible d'obtenir une charge dans un délai de 3 à 12 minutes sous des courants de charge ayant des valeurs maximales de départ de l'ordre de 4 à 25 fois la capacité de l'accumulateur considéré.

En conséquence, pour une charge destinée à s'effectuer dans un laps de temps de l'ordre de 3 à 15 minutes, sous une intensité maximale de charge de l'ordre de quatre à vingt cinq fois la capacité de l'accumulateur à charger, on contrôle la charge d'une part en tension, en limitant la tension de charge à une valeur constante comprise entre 1,60 et 1,67 volt et en arrêtant la charge à détection d'un accroissement significatif de l'intensité du courant absorbé en cours de charge, par exemple de l'ordre de 0,5 à 1 ampère.

Un chargeur 1 tel que sommairement défini en liaison avec la figure 1 permet de mettre en oeuvre le procédé selon l'invention.

Ce chargeur 1 est classiquement destiné à être relié d'une part à la borne positive d'un accumulateur 2 à charger et d'autre part à la borne négative de cet accumulateur d'une manière non figurées et via une masse.

La tension de charge est appliquée aux bornes de l'accumulateur 2 par un agencement 3 associant un redresseur, qui est usuellement alimenté par un réseau de distribution alternatif et qui fournit une tension continue, ou encore une source de courant continu à un régulateur de tension apte à fixer la valeur de ladite tension, en fonction du signal reçu d'un comparateur auquel sont appliquées d'une part une tension de consigne d'autre part la tension aux bornes de l'accumulateur 2.

La tension de consigne est ici fixée à une valeur comprise entre 1,55 et 1,70 volt comme indiqué plus haut.

Le courant de charge est fourni par un étage de puissance 5 contrôlé de manière à être apte à fournir un important courant de charge à l'accumulateur 2, ce courant étant limité par exemple à 28 ampères dans l'exemple évoqué plus haut.

Un shunt 6 associé à un classique agencement de mesure de courant 7 permet de déterminer la valeur du courant de charge fourni par l'étage de puissance à l'accumulateur 2, via le shunt 6.

L'agencement de mesure de courant 7 est relié à un agencement de mémorisation 8 qui est ici associé à une base de temps 10 pour enregistrer cycliquement, par exemple au rythme d'une mesure par seconde, les mesures successivement effectuées par l'agencement de mesure 7.

L'accroissement du courant de charge est détecté par un agencement 9 comprenant un comparateur travaillant à partir des mesures mémorisées au cours d'une opération de charge. L'agencement 9 agit sur l'étage de sortie 5 pour arrêter la charge pour toute augmentation du courant de charge atteignant la valeur de déclenchement choisie. Bien entendu le traitement des signaux de mesure et les actions sur le régulateur de tension et sur l'étage de sortie sont susceptibles d'être réalisés par un processeur dum'ent programmé.

Le fonctionnement du chargeur peut alors être considéré comme composé de trois phase successives.

Pendant une première phase en début de charge, la batterie n'est que partiellement chargée et la tension à ses bornes est inférieure à celle que fournit l'agencement redresseur-régulateur 3, la charge s'effectue à l'intensité de limitation propre au chargeur 1, soit 28 ampères dans l'exemple choisi.

Puis la tension aux bornes de la batterie se rapproche de celle fournie par l'agencement 3 qu'elle atteint pendant que l'intensité du courant de charge décroit plus ou moins rapidement en fonction de la charge déjà accumulée et des conditions dues à l'environnement. La température et la pression interne de l'accumulateur n'ont alors que peu varié.

Puis le courant de charge tend de nouveau à augmenter après être passé par un minimum et il y aurait un dégagement important d'oxygène si l'augmentation du courant n'était pas détectée puis stoppée par arrêt de la charge rapide.

Le mode de charge proposé et la détection de fin de charge utilisée peuvent être associés à un dispositif permettant d'assurer une charge complémentaire d'intensité comprise entre une valeur correspondant au cinq centième de la capacité et une valeur correspondant à cette capacité en Ampère-heure.

L'arrêt de la charge complémentaire est alors déterminé par un auxiliaire de type minuterie ou thermostat.

L'adjonction de tels systèmes de sécurité surveillant les paramètres de l'accumulateur assure pratiquement un doublement du système de contrôle sur le plan de la sécurité ce qui est tout à fait souhaitable pour de telles charges ultrarapides.

## Revendications

1/ Procédé de charge, dit ultrarapide, pour accumulateur cadmium-nickel étanche, caractérisé en ce que ladite charge, effectuée dans un temps de l'ordre de trois à quinze minutes, est réalisée sous une tension de charge inférieure à la tension pour laquelle il y a dégagement d'hydrogène sous forme gazeuse et est arrêtée dès que l'intensité du courant en cours de charge subit un accroissement significatif après avoir décru au fur et à mesure de la charge.

2/ Procédé de charge, selon la revendication 1, caractérisé en ce que la tension de charge fournie à l'accumulateur est limitée à une valeur comprise entre 1,55 et 1,70 volt.

3/ Procédé de charge, selon au moins l'une des revendications 1 et 2, caractérisée en ce que le courant de charge est égal à une valeur de quatre à vingt-cinq fois la capacité de l'accumulateur concerné et en ce que l'accroissement significatif du courant est de l'ordre de 0,1 à 1 ampère.

FIG.1

FIG.2

EP 0 358 213 A1

FIG.3

EP 0 358 213 A1

# FIG.4

EP 0 358 213 A1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | ·US-A-4392101 (D.A.SAAR ET AL) <br> * colonne 20, ligne 29 - colonne 24, ligne 15; figure 14 * <br> ---- | 1 | H02J7/10 |
| Y | FR-A-2416560 (V.M.LAVRENOV; B.C.TSENTER) <br> * page 6, ligne 18 - page 14, ligne 24; figure 1 * <br> ---- | 1 | |
| A | US-A-4629965 (W.H.FALLON ET AL) <br> * colonne 2, ligne 1 - colonne 2, ligne 50; figure 2 * <br> ---- | 1,3 | |
| A | FR-A-2591822 (JULLIAN M.J.R.) <br> * revendications 1-3 * | 1,3 | |
| A | ---- | | |
| A | FR-A-1557592 (F.JUNGHEINRICH) <br> * revendications 1-5 * <br> ------ | 1 | |

**DOMAINES TECHNIQUES RECHERCHES (Int. Cl.5 )**

H02J

Le présent rapport a été établi pour toutes les revendications

| Lieu de la recherche | Date d'achèvement de la recherche | Examinateur |
|---|---|---|
| LA HAYE | 14 NOVEMBRE 1989 | FOURRICHON P.M.L. |